# EUROPEAN PATENT APPLICATION

(11) **EP 1 046 565 A2**
(43) Date of publication of application: **25.10.2000**
(21) Application number: 00108650.3
(22) Date of filing: 20.04.2000
(51) Int. Cl.: B62D 1/04

(54) **Steering device with an operating section mounted to a steering wheel for operating another vehicle-mounted device**

(30) Priority: 21.04.1999 JP 11349499
(71) Applicant: ALPS ELECTRIC CO., LTD., Ota-ku Tokyo (JP)
(72) Inventor: Onodera, Mikio, c/o Alps Electric Co., Ltd., Tokyo (JP); Mitsuzuka, Katsuya, c/o Alps Electric Co., Ltd., Tokyo (JP); Numata, Hidetaka, c/o Alps Electric Co., Ltd., Tokyo (JP); Masudaya, Hideki, c/o Alps Electric Co., Ltd., Tokyo (JP)
(74) Representative: Klunker . Schmitt-Nilson . Hirsch

(57) **Abstract**

A steering device including a steering wheel (1) and switches (2-7) having operating sections for operating devices. Each switch (2-7) functions as a rotary switch to detect rotation, and a push switch to detect a pushing operation. When the switches are not being operated, their corresponding operating sections are disposed at corresponding center positions.

## Description

### BACKGROUND OF THE INVENTION

### 1. Field of the Invention

The present invention relates to a steering device with an operating section mounted to a steering wheel in order to operate another vehicle-mounted device.

### 2. Description of the Related Art

Hitherto, switches used for operating vehicle devices (such as a car radio, an audio device, and an air conditioner) have been mounted on a steering wheel of a vehicle (or an automobile). The switches of a conventional steering device are see-saw or push switches having individual functions. For example, radio-station selection and volume adjustment are carried out separately with corresponding separate switches. Therefore, it has been very troublesome to operate the switches while driving the vehicle.

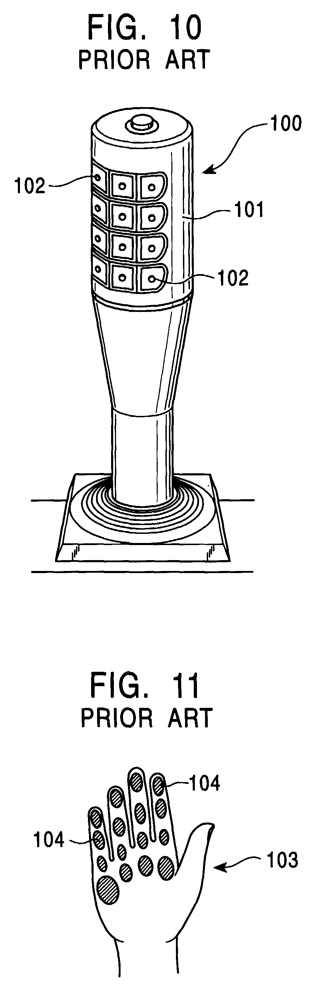

To overcome this problem, a steering device having a structure illustrated using Figs. 10 and 11 has been proposed. As shown in Fig. 10, a joystick 100 is disposed in a vehicle as an operating member provided separately of the steering wheel. Four rows and columns of protrusions 102, or a total of sixteen protrusions 102, are disposed close to each other on a peripheral surface of a gripping section 101 of the joystick 100 so as to be movable forward and backward.

As shown in Fig. 11, when a hand 103 grips the gripping section 101, the protrusions 102 are disposed in correspondence with the portions represented by reference numerals 104. The portions 104 are located in areas of each of the forefinger, the middle finger, the ring finger, and the little finger. These areas extend from the tip to the center portion to a portion situated slightly towards the location where hand is closed together (when the hand 103 grips the gripping section 101) from the base section of each of the aforementioned four fingers. Although not shown, vibrating means including a piezoelectric element is provided at the inner side of each protrusion 102 in order to separately vibrate and control each protrusion 102.

When the operator grips the gripping section 101 with his or her hand 103 and pushes down the joystick 100 in a desired direction, an output signal is generated to allow operation of a vehicle-mounted device, and, based on the generated output signal, the corresponding vibrating means is driven to transmit the vibration to the corresponding protrusion 102. Here, the operator can know which protrusion 102 at what location is vibrating by his or her sense of touch, and, thus, confirm what kind of vehicle device is currently being operated with his or her hand 103.

Accordingly, when the operator grips the gripping section 101 of the joystick 100 with his or her hand 103 to operate the joystick 100, confirmation of a plurality of vehicle device operations can be achieved. This means that the joystick 100 has the advantage of facilitating operation. However, it has the following disadvantages.

That is, since the joystick 100 is disposed in the vehicle as a separate operating member, the operator needs to take one hand off the steering wheel in order to operate the joystick 100. This makes it difficult to operate the steering wheel.

In addition, the joystick 100 requires a plurality of protrusions 102, a plurality of vibrating means provided in correspondence with the plurality of protrusions 102, and a controlling means for separately driving and controlling the plurality of vibrating means. This results in the problems of the use of a larger number of parts, a complicated structure, increased size and cost, and difficulty in assembling the joystick 100.

### SUMMARY OF THE INVENTION

According to the present invention, there is provided a steering device comprising:
a steering wheel; and
a switch including an operating section for operating a device;
   wherein the switch functions as a rotary switch to detect rotation and a push switch to detect a pushing operation; and
   wherein when the switch is not being operated, the operating section is disposed at a center position.

A plurality of the switches may be radially disposed near a center portion of an outer peripheral portion of a top surface of the steering wheel; wherein planes where operating sections of the corresponding switches are rotated lie within a radial surface extending from a center axis of the steering wheel.

A top surface of the operating section of the switch may be disposed in the same plane as a plane of the top surface of the steering wheel.

The operating sections of the corresponding switches may be disposed in a recess in the top surface of the steering wheel.

The steering device may further comprise vibrating means provided at the steering wheel, wherein the vibrating means is vibrated as a result of pushing the operating section of the switch in order to transmit the vibration to the steering wheel.

### BRIEF DESCRIPTION OF THE DRAWINGS

Fig. 1 is a plan view of an embodiment of the steering device in accordance with the present invention.
Fig. 2 is an enlarged sectional view taken along line II-II of Fig. 1.
Fig. 3 is illustrative of the location where the steering device steering wheel and a switch are mounted with respect to each other.
Fig. 4 is a perspective view of a form of the embodiment of the switch of the steering device in accordance with the present invention.
Fig. 5 is a perspective view showing a state in which the switch of Fig. 4 is rotated.
Fig. 6 is a perspective view showing a state in which the switch of Fig. 4 is pushed.
Fig. 7 is an exploded perspective view of the switch of Fig. 4.
Fig. 8 is a perspective view of the switch of Fig. 4 in an assembled state.
Fig. 9 is a plan view of the wafer of the switch of Fig. 4.
Fig. 10 is a perspective view of a conventional signal-input device.
Fig. 11 is a plan view of a hand which operates the signal-input device of Fig. 10.

### DESCRIPTION OF THE PREFERRED EMBODIMENT

Hereunder, a description of a steering device in accordance with the present invention will be given with reference to the drawings.

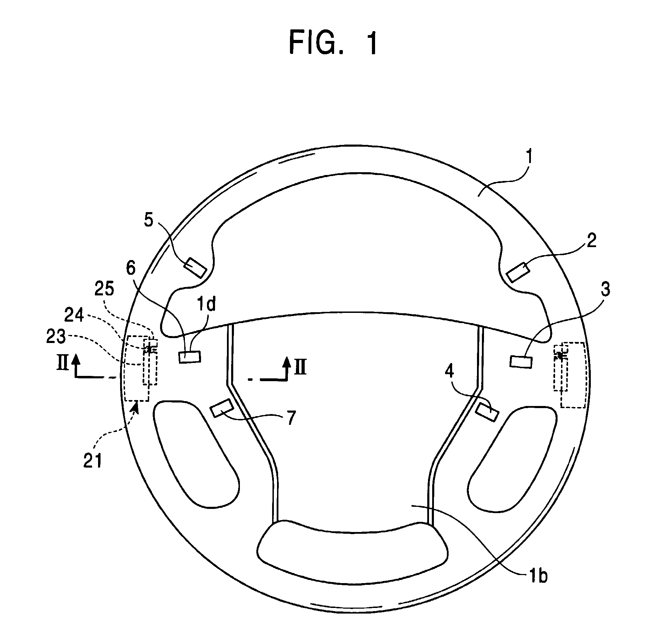

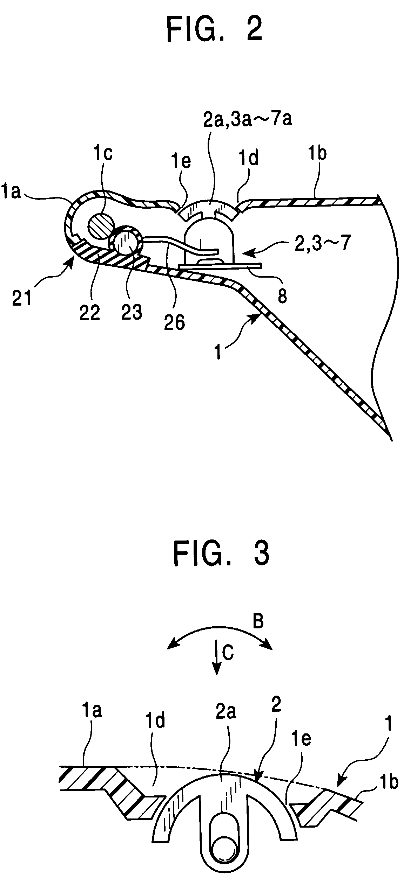

Fig. 1 is a plan view of an embodiment of the steering device in accordance with the present invention. Fig. 2 is an enlarged sectional view taken along line II-II of Fig. 1. Fig. 3 is illustrative of the position where the steering device steering wheel and a switch are mounted with respect to each other.

A substantially circular steering wheel 1 comprises a substantially annular housing 1a, a pad 1b disposed at approximately the center portion of the housing 1a, and an annular steering core 1c disposed in the housing 1a. The steering wheel 1 is rotatably connected to the vehicle body through a steering-wheel shaft (now shown). In other words, the operation of the steering wheel 1 rotates the vehicle body leftwards or rightwards.

In the top surface of the housing 1a, a plurality of recesses 1d (for example, three recesses 1d) are formed near the center portion of the right outer peripheral portion. Similarly, in the same top surface of the housing 1a, a plurality of recesses 1d (for example, three recesses 1d) are formed near the center portion of the left outer peripheral portion. A long quadilateral hole 1e is formed in the bottom wall defining each recess 1d so as extend radially from the center axis of the steering wheel 1.

First to sixth switches 2 to 7 include respective operating sections 2a to 7a. These switches 2 to 7 being connected to a printing wiring board 8 are disposed in the housing 1a by a suitable means. Here, the operating sections 2a to 7a of the corresponding first to sixth switches 2 to 7 protrude outward from their corresponding holes 1e formed at their corresponding recesses 1d. In addition, the top surfaces of the operating sections 2a to 7a are disposed in substantially the same plane as that of the top surface of the housing 1a. When the top surfaces of the operating sections 2a to 7a are disposed inward from the top surface of the housing 1a to an extent not hindering operation, the extent to which the hand bumps into them is decreased. Therefore, improper input operations occur less frequently.

In other words, at the top surface of the housing 1a of the steering wheel 1, the first to third switches 2, 3, and 4 are disposed near the center portion of the right outer peripheral portion, while the fourth to sixth switches 5, 6, and 7 are disposed near the center portion of the left outer peripheral portion. A driver very frequently puts his or her hands near the center portions of the left and right outer peripheral portions of the steering wheel 1. Therefore, when the first to sixth switches 2 to 7 are disposed near these locations, the driver will not have to move his or her hands to operate them, making it very convenient for the driver.

The first to sixth switches 2 to 7 incorporate, as described later, combined operation functions or two different switch operation functions. More specifically, they function as a rotary switch to detect rotation as result of being rotated in the direction of arrow B in Fig. 3; and as a push switch to detect a pushing operation as a result of being pushed in the direction of arrow C in Fig. 3. The first to sixth switches 2 to 7 are mounted on the steering wheel 1 so that the planes where the first to sixth switches 2 to 7 are rotated lie within a radial surface extending from the center axis of the steering wheel 1.

In the embodiment, the first to third switches 2, 3, and 4 provided on the right outer peripheral portion of the steering wheel 1 make up a switch group for operating a car audio device. More specifically, the first switch 2 is used to switch between AM and FM radio and television broadcasts and to set the selected broadcast. The second switch 3 is used to select and set a broadcasting station. The third switch 4 is used to increase and decrease, and set the volume. On the other hand, the fourth to sixth switches 5, 6, and 7 provided on the left outer peripheral portion of the steering wheel 1 make up a switch group for operating a car air conditioner. The fourth switch 5 is used to increase and decrease, and set the air volume. The fifth switch 6 is used to increase and decrease, and set the temperature in the vehicle. The sixth switch 7 is used to select between circulation of air in the vehicle and taking in of air from outside the vehicle.

Here, a description of the second switch 3 used to select and set a broadcasting station will be given. When the driver or operator rotates the operating section 3a of the second switch 3 in a clockwise direction to detect the rotation, the received AM-station frequency, for example, is increased. When the frequency becomes the same as that of the desired broadcasting station, and the operator stops rotating the operating section 3a, removal of the rotational force from the operating section 3a causes it to be automatically restored to the center position. Thereafter, when the operator pushes in the operating section 3a, the audio device is set to receive the desired frequency, allowing the operator to listen to the desired radio program. On the other hand, when the operator rotates the operating section 3a in a counterclockwise direction to detect the rotation, the received AM-station frequency is decreased.

Although the first to sixth switches 2 to 7 have been described as switches for operating a car audio device and an air conditioner, they may also be used to, for example, operate other kinds of vehicle devices, such as a navigation system, a car phone, an auto-cruising device, and automatic windows. The type of operation can be properly selected by, for example, a mode change-over switch (not shown) mounted on the steering wheel 1.

The first to third switches 2 to 4 described above as switches for operating a car audio device each incorporate two different functions. That is, they each function as a rotary switch to detect rotation and a push switch to detect a pushing operation. Therefore, when it is made possible to select different functions (such as switching between AM, FM, and television broadcasts, selection of a broadcasting station, etc.) with one switch, the number of switches can be reduced. For example, the switching between AM, FM, and television broadcasts can be achieved by a switch pushing operation to detect the pushing operation, while the selection of a broadcast can be achieved by a switch rotating operation to detect the rotating operation.

A description of a vibrating means of the steering wheel 1 of the steering device will be given.

In general, when the steering wheel 1 body is directly vibrated by a vibrating means, the vibration becomes weaker because the volume and weight of the steering wheel 1 body is large. Therefore, when the vibrating means is made to directly vibrate a vibration-transmitting cover having a relatively small volume and weight, a strong vibration can be transmitted to the hand which grips an area near the cover. Because of this, a vibration-transmitting cover 21 (shown in Fig. 1) is disposed at the lower surface near the center portion of the left outer peripheral portion of the housing 1a of the steering wheel 1 by embedding it in a hole formed in the housing 1a. (A vibrating-transmitting cover is also disposed at the lower surface near the center portion of the left outer peripheral portion). The vibration-transmitting cover 21 is, for example, a thin plastic plate. As shown in Fig. 2, a solenoid 23 being a vibrating source is disposed at the inner side of the vibration-transmitting cover 21 through a resilient member 22 formed of, for example, rubber or resin foam.

As shown in Fig. 1, a vibrator 25 is disposed at an end of the solenoid 23 through a coil spring 24. The solenoid 23 drives the vibrator 25, which generates vibration which is transmitted to the vibration-transmitting cover 21 through the resilient member 22. This vibration can be felt by the driver's hand by his or her sense of touch.

When vibration is transmitted through the resilient member 22 as in the embodiment, the driver's hand can feel a soft, pleasant vibration. When the vibration-transmitting cover 21 is used, vibration can be transmitted to the driver through a relatively wide area as a result of vibrating the entire vibration-transmitting cover 21. A lead wire 26 is connected to the solenoid 23.

Each vibrating means is constructed so that it vibrates for a predetermined period of time (such as about 1 to 2 seconds) when any one of the corresponding first to sixth switches 2 to 7 is pushed in the direction of arrow C of Fig. 3 to detect the pushing operation. This informs the driver (or the operator) that any one of the corresponding first to sixth switches 2 to 7 has been reliably pushed to detect the pushing operation.

A more detailed description of the first to sixth switches 2 to 7 will now be given.

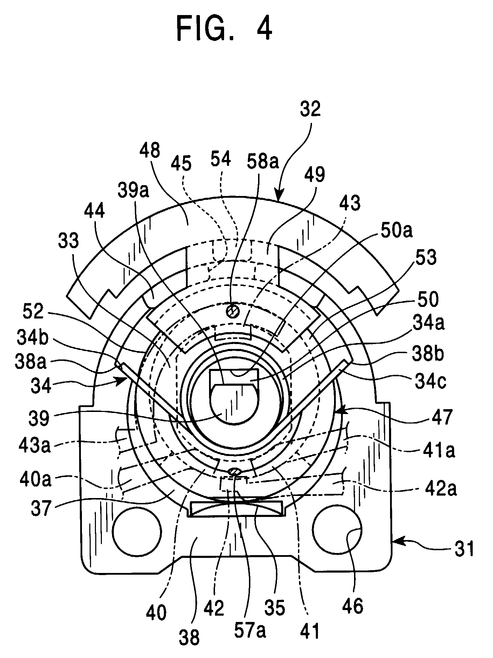

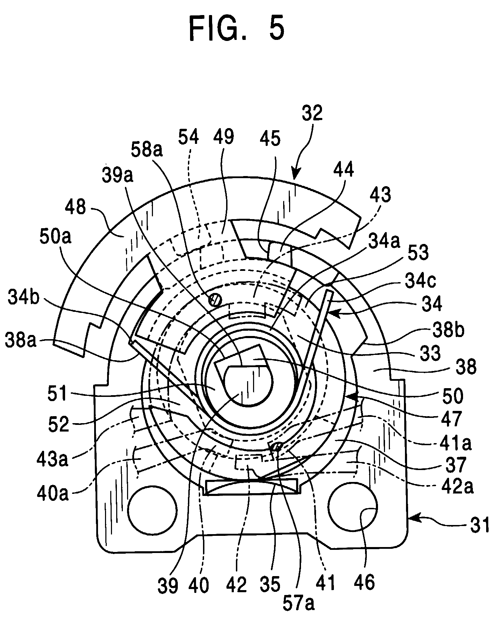

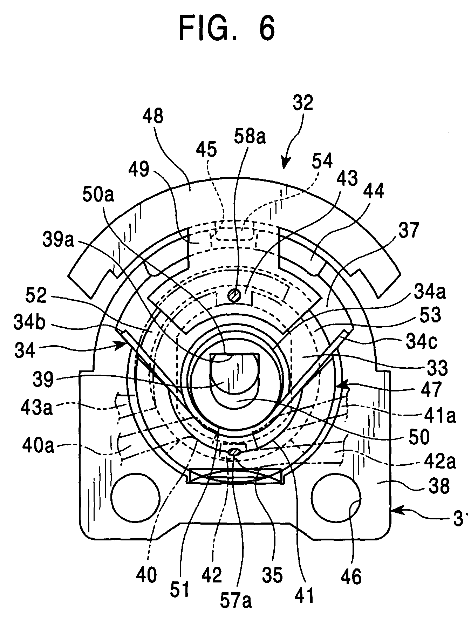

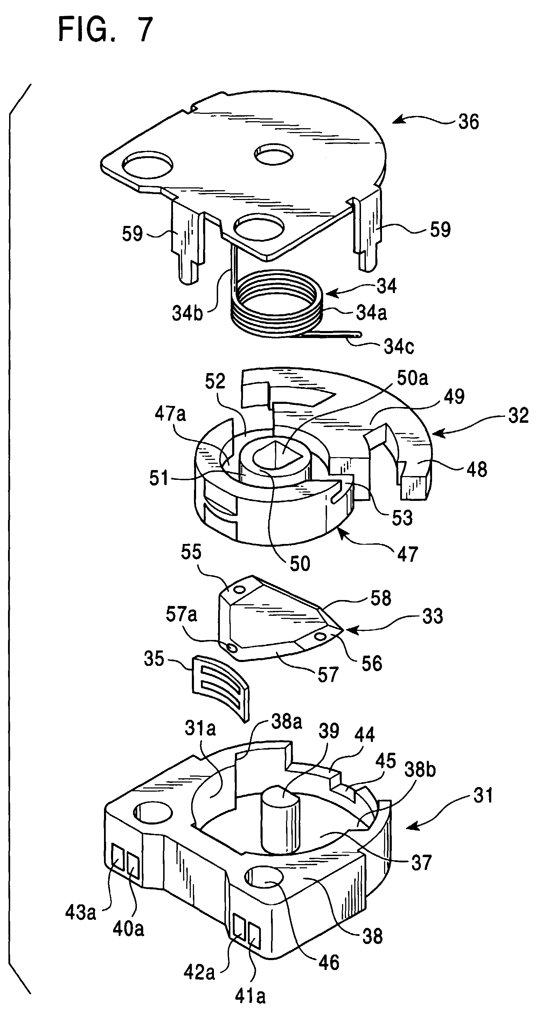

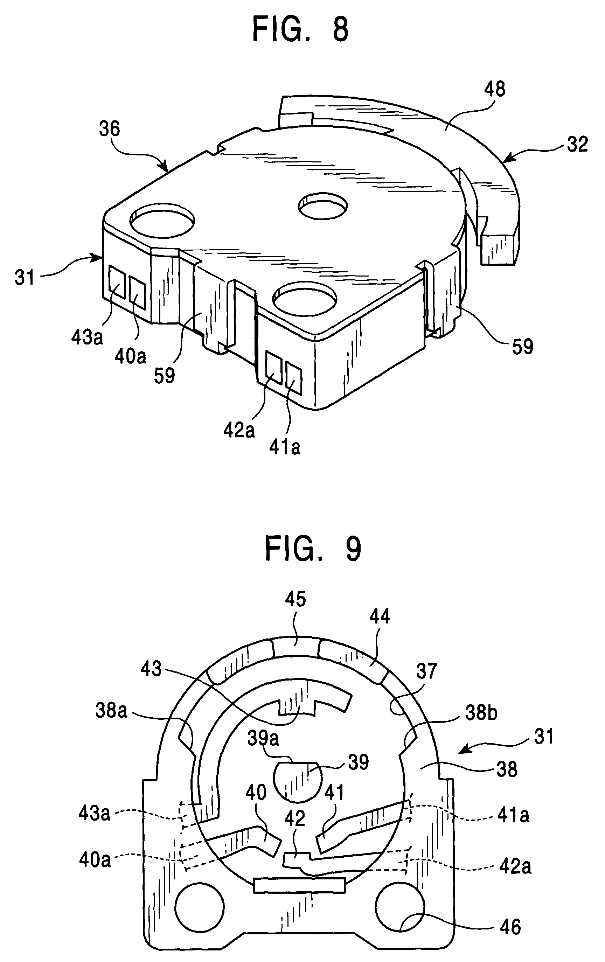

Fig. 4 is a perspective view of a switch used in the embodiment of the steering device in accordance with the present invention. Fig. 5 is a perspective view showing a state in which the switch is rotated. Fig. 6 is a perspective view showing a state in which the switch is pushed. Fig. 7 is an exploded perspective view of the switch. Fig. 8 is a perspective view showing the switch in an assembled state. Fig. 9 is a plan view of the wafer of the switch. The switch shown in Figs. 4 to 9 is that disclosed in Japanese Unexamined Patent Application Publication No. 9-274830 previously filed by the applicant.

As shown in Fig. 7, the switch primarily comprises a wafer 31 formed of synthetic resin and having an upper opening 31a; an operating member 32 rotatably and pushably held by the wafer 31; a sliding member 33 affixed to the lower surface of the operating member 32 and being an electrically conductive resilient plate; a torsional coil spring 34 having a pair of arms 34b and 34c, each of which protrudes from a corresponding end of a wound section 34a at the center thereof; a clicking plate 35 disposed in the wafer 31; and a covering member 36 for covering the upper opening 31a in the wafer 31.

As shown in Fig. 9, the wafer 31 includes a substantially circular inside bottom section 37 and a wall 38 formed in a standing manner along the entire periphery of the inside bottom section 37. A pair of engaging steps 38a and 38b are formed on the wall 32. A supporting shaft 39 for axially supporting the operating section 32 is formed in a standing manner at the center of the inside bottom section 37. A vertical planar surface 39a which extends in a direction perpendicular to the direction in which the operating member 32 is pushed is formed at a location of the supporting shaft 39 on a side where the pushing movement starts (that is, at the upper side in Fig. 9).

Rotating-operation-detecting stationary contacts 40 and 41, a pushing-operation-detecting stationary contact 42, and a common stationary contact 43 are integrally formed with the inside bottom section 37. The stationary contacts 40 and 41 are formed along a direction of rotation of the operating member 32. The stationary contact 42 is positioned behind the stationary contacts 40 and 41 in the direction in which the operating member 32 is pushed (that is, at the lower side in Fig. 9). The common stationary contact 43 is formed along a direction in which the operating member 32 is rotated and the direction in which it is pushed so as oppose the stationary contact 42, with the supporting shaft 39 being disposed therebetween.

The stationary contacts 40 to 43 include corresponding external terminals 40a to 43a exposed from a side 38 of the wafer 31 (see Fig. 8). A location of the wall 38 on the side where switch pushing movement is started is formed into a curved shape with the supporting shaft 39 as a center. A step 44 is formed at the curved portion of the wall 38. The step 44 defines the range of rotation of the operating member 32. A recess 45 is formed in the center portion of the step 44. Mounting holes 46 are formed in a location of the wall 38 on a side where the pushing movement terminates (that is, in the lower side in Fig. 9).

The left and right sides of the operating member 32 are formed integrally and symmetrically in shape. As shown in Fig. 7, it includes a base section 47 which is disposed in the wafer 31, an operating section 48 which protrudes from the wafer 31, and a connecting section 49 connecting the base section 47 and the operating section 48. The connecting section 49 is inserted into the step 44 of the wafer 31. A cylindrical boss 51 is formed in a standing manner at the center of the base section 47. A slot 50 formed in the boss 51 extends in a direction in which the operating member 32 is pushed and receives the supporting shaft 39.

An annular groove 47a is formed around the slot 50. A pair of engaging grooves 52 and 53 are formed so as to extend obliquely upward from the annular groove 47a. As shown in Fig. 4, the wound section 34a of the torsional coil spring 34 wound around the boss 51 is located in the annular groove 47a. The arms 34b and 34c pass through the corresponding engaging grooves 52 and 53 and are stopped by the respective engaging steps 38a and 38b of the wafer 31.

A planar surface 50a which is perpendicular to a longitudinal direction of the slot 50 is formed at a location of the slot 50 on the side where the pushing movement starts. When the operating member 32 is not being operated as shown in Fig. 4, or when it is rotated as shown in Fig. 5, the planar surface 50a defining the slot 50 and the planar surface 39a of the supporting shaft 39 are kept separated from each other. On the other hand, when the operating member 32 is pushed in as shown in Fig. 6, the planar surfaces 50a and 39a come into contact with each other.

The operating section 48 is formed into a curved shape. with the base section 47 as a center. A protrusion 54 is formed at the inside center of the operating section 48. When the operating member 32 is rotated as shown in Fig. 5, the protrusion 54 moves along the outer side of the step 44 of the wafer 31. When the operating member 32 at the center position is pushed in as shown in Fig. 6, the protrusion 54 moves into the recess 45 in the wafer 31.

The sliding member 33 includes a pair of mounting sections 55 and 56 mounted to the lower surface of the base section 47, and a pair of slide-contact sections 57 and 58, each of which is formed between the mounting sections 55 and 56. The mounting sections 55 and 56 are symmetrically formed on opposite sides of the sliding member 33. Similarly, the slide-contact sections 57 and 58 are symmetrically formed on opposite sides of the sliding member 33. The mounting sections 55 and 56 are integrally formed with the slide-contact sections 57 and 58. Downwardly protruding movable contacts 57a and 58a are formed at center portions of their corresponding slide-contact sections 57 and 58. The movable contact 58a is kept at all times in contact with the common stationary contact 43.

In order to make it easier to illustrate the relative positions of the movable contacts 57a and 58a, in Figs. 4 to 6, the movable contacts 57a and 58a are represented by a hatched ellipse and a hatched circle, respectively; and the stationary contacts 40 to 43 are represented by alternate long and two short dashed lines.

The covering member 36 includes a plurality of stopper sections 59. By placing these stopper sections 59 along the wall 38 of the wafer 31, by bending ends of these stopper sections 59, and by stopping the bent ends by the bottom surface of the wafer 31, the upper opening 31a in the wafer 31 is covered by the covering member 36, as shown in Fig. 8.

In the switch having the above-described structure, when, as shown in Fig. 4. the operating member 32 is not being operated, the arms 34b and 34c of the torsional coil spring 34 are stopped by the corresponding engaging steps 38a and 38b of the wafer 31, and the wound section 34a is wound around the boss 51 of the operating member 32. Therefore, a returning force for returning the operating member 32 to the center position is exerted on the operating member 32 by the torsional coil spring 34. Here, the protrusion 54 of the operating member 32 opposes the recess 45 in the wafer 31, and the planar surface 50a defining the slot 50 in the operating member 32 and the planar surface 39a of the supporting shaft 39 are separated from each other.

While the movable contact 58a of the sliding member 33 is kept at all times in contact with the common stationary contact 43, the movable contact 57a is not in contact with any of the stationary contacts 40, 41, and 42. Therefore, neither the rotary switch function nor the push switch function is in an activated state.

From this non-operated state, when, as shown in Fig. 5, the operating member 48 of the operating member 32 is rotated counterclockwise, the sliding member 33 rotates in response to the rotation of the operating member 32, with the supporting shaft 39 as a center. This causes the movable contact 57a of the sliding member 33 to come into contact with the stationary contact 41. Therefore, the external terminal 41a and the common external terminal 43a are brought into electrical conduction, so that only the rotary switch function is brought into an activated state, whereby a first electrical signal is output. Here, the arm 34b of the torsional coil spring 34 is stopped by the engaging step 38a of the wafer 31, but the arm 34c is separated from the engaging step 38b as a result of being pushed in the direction of rotation by an end defining the engaging groove 53 in the operating member 32. Therefore, by compressing the torsional coil spring 34 so that the distance between the arms 34b and 34c becomes smaller, a returning force for returning the operating member 32 to the center position is exerted on the operating member 32.

When the driver lets go of the operating section 48, the operating section 48 rotates clockwise by the urging force of the torsional coil spring 34, and automatically returns to the center position (or the state shown in Fig. 4), whereby the movable contact 57a separates from the stationary contact 41. Therefore, the rotary switch function is brought back into a deactivated state. When the operating member 32 is being rotated, the protrusion 54 moves away from the recess 45 and moves along the outer side of the step 44. Therefore, even when the driver or operator accidentally exerts a force in the pushing direction during rotation thereof, the protrusion 54 comes into contact with the step 44. Consequently, the operating member 32 cannot be pushed in, making it possible to prevent the operator from improperly operating the operating member 32.

Similarly, when the operating member 32 is rotated clockwise, the movable contact 58a is kept at all times in contact with the common stationary contact 43, but the movable contact 57a of the sliding member 33 comes into contact with the movable contact 40. Therefore, the external terminal 40a and the common external terminal 43a are brought into electrical conduction, so that only the rotary switch function is brought into an activated state, whereby a second electrical signal is output.

When, from the state of the operating member 32 shown in Fig. 4, the operating section 48 is pushed in the direction of the wafer 31, the operating member 32 and the sliding member 33 move integrally in a longitudinal direction of the slot 50, as shown in Fig. 6. This causes the clicking plate 35 to get buckled and deformed as a result of being pushed against the base section 47, thereby producing a click. Since the movable contact 57a of the sliding member 33 is in contact with the stationary contact 42, the external terminal 42a and the common external terminal 43a are brought into electrical conduction, so that only the push switch function is brought into an activated state, whereby a third electrical signal is output.

Here, the arms 34b and 34c of the torsional coil spring 34 are stopped by the corresponding engaging steps 38a and 38b of the wafer 31. The wound section 34a is moved in the pushing direction by the boss 51 of the operating member 32. By compressing the torsional coil spring 34 so that the distance between the arms 34b and 34c decreases, a returning force for returning the operating member 32 to the center position is exerted on the operating member 32. When the operator lets go of the operating section 48, the operating member 32 moves upward by the urging force of the torsional coil spring 34, and automatically returns to the center position (or the state shown in Fig. 4), whereby the movable contact 57a moves away from the stationary contact 42. Therefore, the push switch function is brought back again into a deactivated state.

When the operating member 32 is being pushed in, the protrusion 54 moves into the recess 45. Therefore, even when the driver accidentally exerts a force in the direction of rotation, the protrusion 54 comes into contact with a wall surface defining the recess 45. Therefore, the operating member 32 cannot be rotated, making it possible to prevent the operator from improperly operating the operating member 32.

The operating section 48 of the switch operating member 32 illustrated in Figs. 4 to 9 is the same type as the above-described operating sections 2a to 7a of the corresponding first to sixth switches 2 to 7. Therefore, when these switches 2 to 7 are not being operated, the operating sections 2a to 7a thereof are at their corresponding center positions as a result of being automatically restored thereat. The external terminals 40a to 43a illustrated in Figs. 4 to 9 are connected to the printed wiring board 8 (shown in Fig. 2) by solder.

Although the above-described embodiment of the present invention is described taking an automobile steering device as an example, the present invention is not limited thereto. It may be applied to other types of steering devices, such as airplane, ship, and working vehicle steering devices.

As can be understood from the foregoing description, the steering device of the present invention comprises a switch including an operating section functioning as a rotary switch to detect rotation and a push switch to detect a pushing operation. Therefore, more than one function can be selected by operating one switch. In addition, the switch can be easily and stably operated because the operating section, when being operated, is kept at all times at the center position. Consequently, while operating the steering wheel, the operator can operate using only a small number of switches various devices, such as a car audio device, an air conditioner, a navigation system, a car phone, or an automatic window, making it very convenient for the operator.

Since two different operations, a rotating operation and a pushing operation, can be carried out on one operating section, the corresponding switch is easier to operate compared to a multi-directional switch such as a four-directional switch. Therefore, the driver (or the operator) can reliably operate the switch.

A plurality of switches may be radially disposed near the center portion of the outer peripheral portion of the top surface of the steering wheel. In addition, the planes where the operating sections of the corresponding switches are rotated may lie within a radial surface extending from substantially the center axis of the steering wheel. Therefore, the operator can easily operate each switch operating section with his or her finger.

The top surface of the operating section of the switch may lie in the same plane as the plane of the top surface of the steering wheel. Therefore, the operator will not bump his or her hand against the operating section of the switch while operating the steering wheel. Consequently, the operator is prevented from improperly operating the switch.

The operating sections of the switches may be disposed in a recess formed in the top surface of the steering wheel. Accordingly, the switches can be disposed at the steering wheel simply by forming a recess which can receive the operating sections. The recess protects the switches from, for example, an operator's finger. As a result, it is possible to prevent the operator from accidentally operating the switches, and to provide a low-cost steering device.

A vibrating means may be provided on the steering wheel, and vibrated as a resulting of pushing the operating section of the switch. This makes it possible to reliably inform the operator that the switch has been reliably operated. Therefore, a blind-touch operation can easily be carried out.

## Claims

1. A steering device comprising:
a steering wheel; and
a switch including an operating section for operating a device;
wherein the switch functions as a rotary switch to detect rotation and a push switch to detect a pushing operation; and
wherein when the switch is not being operated, the operating section is disposed at a center position.

2. A steering device according to Claim 1, wherein a plurality of the switches are radially disposed near a center portion of an outer peripheral portion of a top surface of the steering wheel; and wherein planes where operating sections of the corresponding switches are rotated lie within a radial surface extending from a center axis of the steering wheel.

3. A steering device according to Claim 1 or 2, wherein a top surface of the operating section of the switch is disposed in the same plane as a plane of the top surface of the steering wheel.

4. A steering device according to any of Claims 1 to 3, wherein the operating section of a corresponding switch is disposed in a recess in the top surface of the steering wheel.

5. A steering device according to any of Claims 1 to 4, further comprising vibrating means provided at the steering wheel, wherein the vibrating means is vibrated as a result of pushing the operating section of the switch in order to transmit the vibration to the steering wheel.
